# EUROPEAN PATENT SPECIFICATION

(11) **EP 0 493 875 B1**
(45) Date of publication and mention of the grant of the patent: **20.12.1995**
(21) Application number: 91309354.8
(22) Date of filing: 10.10.1991
(51) Int. Cl.: B62D 55/24

(54) **Rubber track**
Gummi-Laufkette
Chenille en caoutchouc

(30) Priority: 20.12.1990 JP 412452/90; 23.01.1991 JP 22993/91; 07.05.1991 JP 131765/91
(43) Date of publication of application: 08.07.1992
(73) Proprietor: Bridgestone Corporation, Tokyo 104 (JP)
(72) Inventor: Togashi, Sumio, Chigasaki City, Kanagawa Pref. (JP)
(74) Representative: Whalley, Kevin

(56) References cited:
- EP-A- 0 215 221
- EP-A- 0 300 488
- EP-A- 0 384 376
- DE-B- 1 180 260
- DE-C- 606 276
- US-A- 3 773 394

## Description

This invention relates to a rubber track mainly made of an elastic material such as rubber having a number of metal core members embedded therein which are arranged in parallel with one another and extending perpendicularly to a longitudinal direction of the rubber track, and more particularly to a rubber track to be used for driving construction machines or civil engineering working machines

In construction machines or civil engineering working machines, iron shoe crawlers have long been used for driving them. Recently, however, use of rubber tracks in such machines has commenced. The rubber tracks mitigate vibrations to be transmitted to operators and do not damage pavements on which machines equipped with the rubber tracks run. Therefore, the rubber tracks have been progressively widely used for these machines.

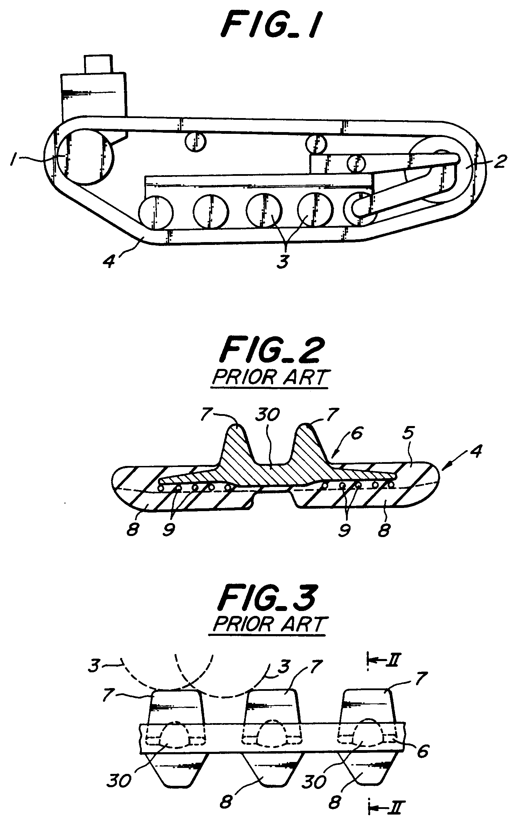

Referring to Figs. 1, 2 and 3 of the accompanying drawings illustrating one example of a conventional rubber track 4, this endless rubber track 4 extends around a sprocket wheel 1, an idler wheel 2 and rollers 3 of a machine. The rubber track is maintained under tension by a tension mechanism supporting the idler wheel 2 and driven by the sprocket wheel 1 to which a driving force is transmitted from a transmission of the machine.

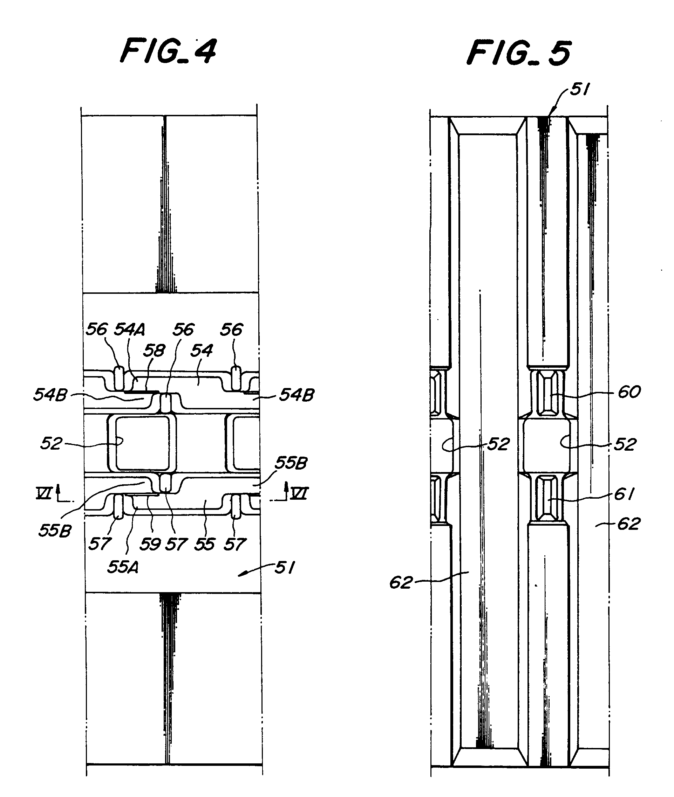

Fig. 2 is a sectional view of the rubber track 4 having metal core members 6 according to the prior art. Metal core members 6 are embedded in the rubber material 5 of the rubber track 4 such that they are in parallel with one another and extend in directions perpendicular to the longitudinal direction of the rubber track 4. Each of the metal core members 6 is formed with a pair of projection guides 7 projecting from the inner surface of the rubber track 4. On top surfaces of the projection guides 7 the rollers 3 roll as shown in Fig. 3. The rubber track 4 has lugs 8 formed on its outer circumference and includes steel cords 9 embedded in the rubber material 5 on the outer side of the metal core members 6.

As shown in Fig. 3, the projection guides 7 of the adjacent metal core members 6 must be spaced sufficiently to avoid any interference of the upper ends of the projection guides 7 with each other when the metal core members move around the sprocket wheel 1 or the idler wheel 2. Therefore, when the rollers 3 run on the top surfaces of the projection guides 7, the rollers 3 fall between the projection guides 7 so as to be raised and lowered to cause vibrations in the machine equipped with the rubber track 4.

In order to avoid this, it has been proposed to widen the upper ends of the projection guides 7 in the longitudinal direction of the rubber track to narrow the spaces between the projection guides 7. However, such a solution has a limitation because the widened upper ends of the projection guides tend to interfere with each other. Moreover, it has been proposed to arrange two adjacent metal core members in staggered relation. However, such an arrangement of the metal core members is not sufficient to prevent the vibration.

Furthermore, a machine or vehicle equipped with such rubber tracks often tends to shift in width directions detrimentally, and when the rubber tracks ride over stones, adjacent metal core members are likely to be deformed independently. In such cases, top surfaces of the metal core members, on which rollers are rolling, are shifted, or the whole rubber tracks are shifted so as to be detracked from the machine. This particularly occurs in the case that the machine runs on a place including small stones scattered thereon, a sandy soil or a swampy land.

With the rubber tracks, moreover, the rigidity in lateral directions is inherently somewhat inferior to that of iron shoe rubber tracks, so that the rubber tracks tend to be detracked from rollers of the machine. Therefore, it has been proposed to use wider metal core members to be embedded in the rubber tracks.

However, in the case of the wider metal core members, the rubber tracks become heavy to cause new difficulties in operation such as transportation, installation onto the machine, storage and the like. Moreover, the wider the metal core members, the more stresses would be concentrated in parts of the rubber tracks not having metal core members embedded therein when the rubber tracks are moved around sprocket wheels and idler wheels. Therefore, it is practically apparent that the parts of the rubber track subjected to the stress concentration are fatigued to cause cracks therein or to be damaged to lower the durability of the rubber track.

It is an aim of the present invention to provide a rubber track which overcomes the disadvantages of the prior art and which suppresses vibrations and prevents its projection guides or guide rails from being damaged and the rubber track *per se* from being detracked from a machine equipped with the rubber track.

Attention is drawn to the disclosure of EP-A-0490829 which was published after the priority date of this patent application, but has an earlier priority date.

The present invention provides a rubber track including a rubber track main body made of an elastic material forming an endless belt and a number of metal core members extending in the width direction of the rubber track main body and embedded therein substantially in parallel with one another with a predetermined interval in the longitudinal direction of the rubber track main body, said metal core members projecting inwardly of said endless belt to form in operation a pair of guide rails for rollers of a machine equipped with the rubber track, characterized in that said metal core members forming said guide rails have extensions integrally formed therewith, whose forward ends and rearward ends of adjacent metal core members are successively overlapping in thickness and/or width directions of the rubber track main body, and wherein the overlapped regions of the extensions of the core members are embedded in the rubber track main body.

With this arrangement, the extensions of the metal core members are overlapping in the thickness and/or width directions of the rubber track main body so that effective guide rails for rollers of a machine equipped with the rubber track are always ensured, even if a great force is applied to the rubber track in width and thickness directions of the rubber track. Therefore, the rubber track according to the invention can prevent damage of metal core members and mitigate detracking of the rubber track *per se* from the machine.

Said extensions of each of the metal core members may consist of first extensions extending in one longitudinal direction of the rubber track main body and positioned on the outer side thereof and second extensions extending in the opposite longitudinal direction of the rubber track main body and positioned on the inner side thereof, the first extensions being overlapping second extensions of the adjacent metal core member in the width directions of the rubber track main body.

With this arrangement, the first extensions are overlapping the second extensions of the adjacent metal core member in width directions of the rubber track main body, so that the guide rails are formed continuously to prevent rollers from falling between discontinuous portions of rails and hence to mitigate vibrations caused at the guide rails. Moreover, the rubber track main body may be formed with small and large recesses at locations corresponding to overlapping portions of the guide rails. Therefore, the rubber track is further improved in flexibility so that it is readily extended around a driving wheel and an idler wheel of a machine.

Each of said metal core members may comprise on the side opposite to the guide rails with respect to the metal core member a first pair of extensions extending from the core member in one longitudinal direction of the rubber track main body and a second pair of extensions extending from the core member in the opposite longitudinal direction of the rubber track main body, and the first pair of extensions are overlapping a second pair of extensions of the adjacent metal core member in the width direction of the rubber track main body.

When a machine equipped with rubber tracks runs on an uneven road or turns at a sharp corner, the advancing direction of the rubber tracks often shifts from the running direction of the machine to cause detracking of the rubber tracks from the machine.

This results mainly from the fact that metal core members for transmitting the driving force from sprocket wheels are individually independent from each other and they are connected by a rubber track main body made of an extensible and contractible elastic member. Although steel cords as tension members are preferably embedded in the rubber track main body in its longitudinal direction, the rubber track main body does not have any means preventing elongation thereof in width directions so that the rigidity of the rubber track main body in the width directions is comparatively low. Therefore, when the rubber track main body is extended or contracted, the metal core members tend to shift laterally and the rubber track is likely to be twisted. Moreover, when the rubber track rides over small stones, it is often deformed in a reverse direction or the metal core members are frequently rotated in longitudinal directions (this phenomenon is referred to as "overhanging"). These phenomena result from the fact that the metal core members embedded in the rubber track main body are independently movable

According to the invention, the adjacent metal core members are formed with extensions opposed to each other so that these extensions are overlapping each other in thickness and/or width directions of the rubber track to prevent relative movement between the adjacent metal core members.

The overlapping locations are preferably arranged in the same plane as that of a row of steel cords (tension members) or somewhat on an outer side thereof. In the case that the overlapping locations are arranged on the outer side of the steel cords, it is effective to prevent lateral shifting, torsion, reverse bending and the like.

The invention will be further described, by way of example only, with reference to the accompanying drawings, in which:
Fig. 1 is a side view of a machine equipped with rubber tracks;
Fig. 2 is a sectional view of a rubber track of the prior art used in the machine shown in Fig. 1;
Fig. 3 is a partial side view illustrating the rubber track of the prior art;
Fig. 4 is a partial plan view of a rubber track of a preferred embodiment of the invention viewed from the inside thereof;
Fig. 5 is a back view of the rubber track shown in Fig. 4;
Fig. 6 is a sectional view taken along the line VI-VI in Fig. 4;
Fig. 7 is a plan view of a metal core member used in the rubber track shown in Fig. 4;
Fig. 8 is a sectional view taken along the line VII-VII in Fig. 7;
Fig. 9 is a plan view illustrating the arrangement of guide rails of the rubber track shown in Fig. 4;
Fig. 10 is a plan view illustrating a modification of the metal core member according to the invention;
Fig. 11 is a plan view illustrating a rubber track of a second embodiment viewed from the inside thereof;
Fig. 12 is a sectional view taken along the line XII-XII in Fig. 11;
Fig. 13 is plan view illustrating a rubber track of a third embodiment;
Fig. 14 is a sectional view of a rubber track of a fourth embodiment;
Fig. 15 is a partial plan view illustrating a rubber track of a fifth embodiment;
Fig. 16 is a front elevation of a metal core member used in a sixth embodiment;
Fig. 17 is a back view of the metal core member shown in Fig. 16;
Fig. 18 is a sectional view taken along the line XVIII-XVIII in Fig. 16;
Fig. 19 is a plan view illustrating a rubber track of a seventh embodiment;
Fig. 20 is a sectional view taken along the line XX-XX in Fig. 19;
Fig. 21 is a plan view illustrating a rubber track of an eighth embodiment;
Fig. 22 is an enlarged sectional view taken along the line XXII-XXII in Fig. 21;
Fig. 23 is a plan view of a rubber track of a ninth embodiment;
Fig. 24 is a plan view illustrating a rubber track similar to that shown in Fig. 23 but provided with lateral shift preventing means;
Fig. 25 is a partial sectional view taken along the line XXV-XXV in Fig. 24;
Fig. 26 is a sectional view illustrating another embodiment of lateral shift preventing means;
Fig. 27 is a sectional view illustrating a modification of the metal core members shown in Fig. 22;
Fig. 28 is a sectional view illustrating a moving state of the metal core members shown in Fig. 27 moving around a driving wheel;
Fig. 29 is a plan view illustrating a rubber track of a tenth embodiment; and
Fig. 30 is a sectional view taken along the line XXX-XXX in Fig. 29.

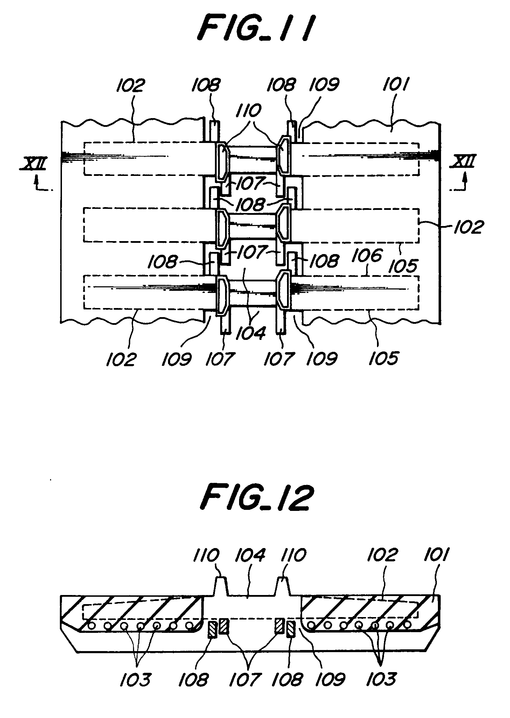

It should be noted that, in the embodiments of Figs. 11 to 30, the overlapped regions of the extensions of the core members are illustrated as being exposed from the rubber track main body.

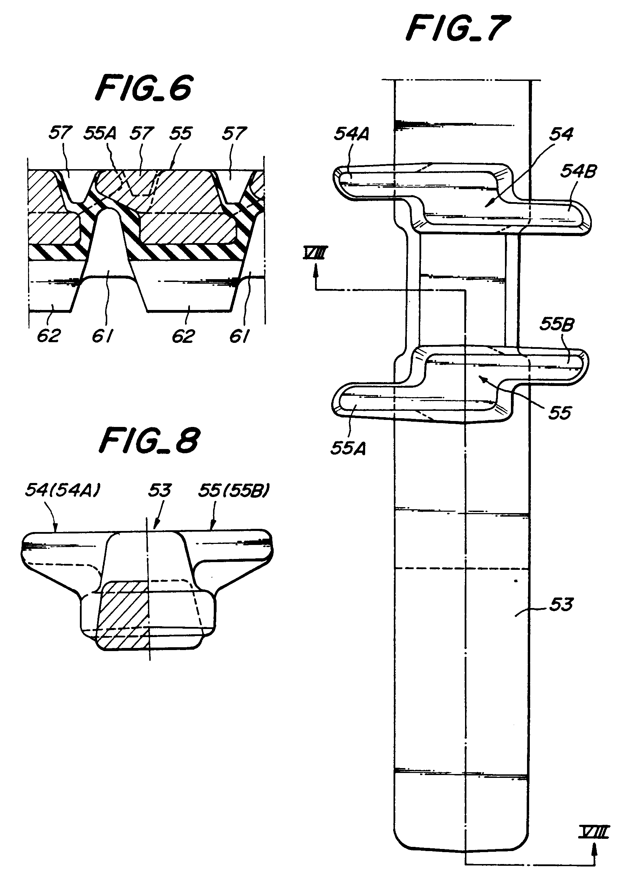

Referring to Fig. 4 partially illustrating in a plan view a first embodiment of a rubber track according to the invention viewed from the inside thereof, a rubber track main body 51 is formed with mesh recesses 52 in a row with a predetermined interval in the longitudinal direction along a center line of its width for receiving teeth of a sprocket wheel (not shown). Each of metal core members 53 is embedded in the rubber track main body 51 between the two mesh recesses 52. As shown in Figs. 7 and 8, the metal core members 53 project beyond the inner surface of the rubber track main body 51 to form a pair of guide rails 54 and 55 having flat surfaces extending in the longitudinal direction of the rubber track main body 51, on which rollers (not shown) may roll.

The guide rails 54 and 55 of each of the metal core members 53 include first extensions 54A and 55A arranged on the outer sides thereof and extending toward the left hand in Fig. 7 and second extensions 54B and 55B arranged on the inner side of the first extensions 54A and 55A and extending toward the right hand, respectively. The first extensions 54A and 55A of one metal core member 53 are adjacent and overlapping in width directions of the rubber track main body 51 with extensions 54B and 55B of the adjacent metal core member 53, respectively. Small recesses 56 and 57 are formed in the inner surface of the rubber track main body 51 adjacent ends of the extensions 54A, 54B and 55A, 55B.

Moreover, the inner surface of the rubber track main body 51 is formed with grooves 58 at locations between the adjacent small recesses 56 and between the adjacent extensions 54A and 54B, and with grooves 59 at locations between the adjacent small recesses 57 and between the adjacent extensions 55A and 55B. These grooves 58 and 59 may be not necessarily formed at the time when the rubber track main body 51 is formed because these grooves may be formed later in use by natural cutting of these portions of the rubber subjected to actual loads. In order to form the grooves 58 and 59 at the time when the rubber track main body 51 is formed, they can be readily formed by setting thin plates in a mold for forming the main body.

Further, the rubber track main body 51 is formed in its ground contact surface with large recesses 60 and 61 at locations corresponding to the adjacent extensions 54A and 54B and 55A and 55B as shown in Fig. 5. The rubber track main body 51 is further formed in the ground contact surface with lugs 62. The locations of the small and large recesses 57 and 61 are clearly shown in Fig. 6 which is a sectional view taken along the line VI-VI in Fig. 4.

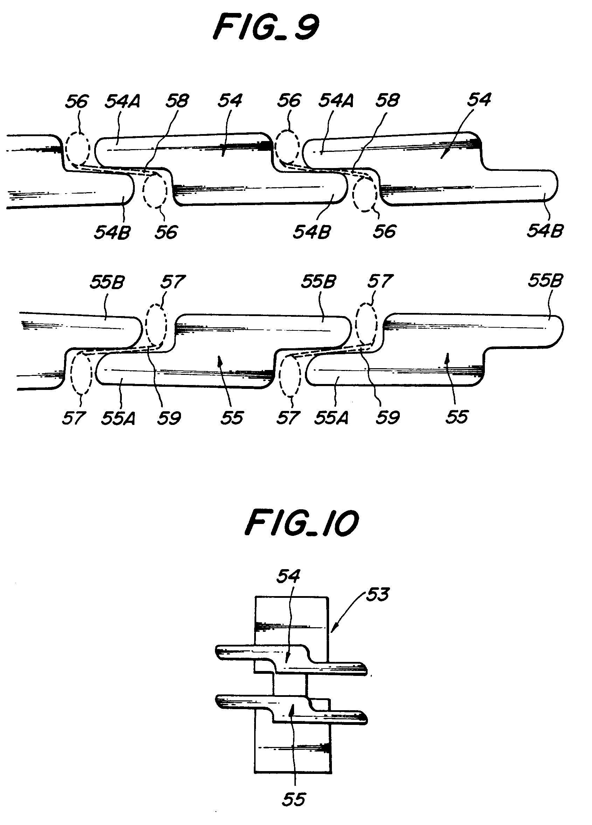

Fig. 9 is a plan view illustrating in solid lines the arrangement of the guide rails 54 and 55 only. This drawing further shows the overlap of the extensions 54A and 54B and the overlap of the extensions 55A and 55B, and the locations of the small recesses 56 and 57 and the grooves 58 and 59 in broken lines.

Fig. 10 illustrates a modification of the guide rails 54 and 55 of the metal core member 53. In this embodiment, the metal core members 53 are also embedded in the rubber track main body 51 such that ends of the guide rails are overlapping in the width directions in the same manner as in the first embodiment.

As can be seen from the above description, according to the first embodiment, the extensions of the guide rails having flat surfaces as roller rolling surfaces are overlapping in the width directions so that the rollers move on the guide rails smoothly without falling between the guide rails and without causing detrimental vibrations. Moreover, according to the first embodiment, small recesses are formed in the inner surfaces of the rubber track main body at the overlapping locations of the extensions and the rubber track main body is further formed in the ground contacting surface with large recesses. Therefore, the rubber track according to the invention is easily deformed or bent when it is extended around a driving sprocket wheel and an idler wheel. The rubber track according to the invention is therefore improved not only in respect of prevention of vibrations and detracking from a machine but also in respect of flexibility. Moreover, the guide rails are so constructed as to prevent rollers of a machine equipped with the rubber track from falling between the guide rails, so that the durability of the rubber track according to the invention is also improved.

Fig. 11 illustrates a second embodiment of a rubber track and Fig. 12 is a sectional view taken along the line XII-XII in Fig. 11. A rubber track main body 101 is made of an elastic material such as rubber and forms an endless belt. A number of metal core members 102 are embedded in the rubber track main body 101 with a predetermined interval, and steel cords 103 as tension members in a row are embedded in the main body 101 on the outer side of the metal core members 102. The rubber track main body is formed with mesh recesses 104 at the center thereof along its longitudinal direction for receiving teeth of a sprocket wheel (not shown) of a machine to transmit a driving force to the rubber track. The metal core members 102 are integrally formed with guide rails 110 which project inwardly of the rubber track main body 101 and on which rollers (not shown) of the machine may roll.

Each of the metal core members 102 is formed with a first pair of extensions 107 and a second pair of extensions 108 on the side opposite to the guide rails and extending from edges 105 and 106 of the metal core member 102 in the longitudinal direction of the rubber track main body 101, respectively. The first pair of extensions 107 of the metal core member 102 are adjacent and overlapping the second pair of the extensions 108 of the adjacent metal core members 102 in the width directions of the rubber track main body 101.

In this embodiment, the metal core members 102 are arranged continuously so that the first pairs of extensions 107 of metal core members 102 are located within the second pairs of extensions 108 of the adjacent metal core members 102. The first and second pairs of extensions 107 and 108 extend in the mesh recesses 104 formed along the center line of the rubber track main body 101 in this embodiment. Therefore, the mesh recesses 104 extend longer in the width directions of the rubber track main body 101 to form spaces 109. The extensions 107 and 108 are overlapping in the spaces 109.

Fig. 13 illustrates a third embodiment, in which spaces 109 are formed separately from the mesh recesses 104. The spaces 109 may be formed independently from the mesh recesses 104 depending upon overlapping positions of the extensions 107 and 108 extending from edges 105 and 106 of the metal core members 102.

Moreover, the extensions 107 and 108 may be embedded in the rubber track main body 101 without forming the spaces 109 as the case may be (not shown). In other words, the metal core members 102 may be wholly embedded in the rubber track main body 101 in the state of the extensions 107 and 108 overlapping.

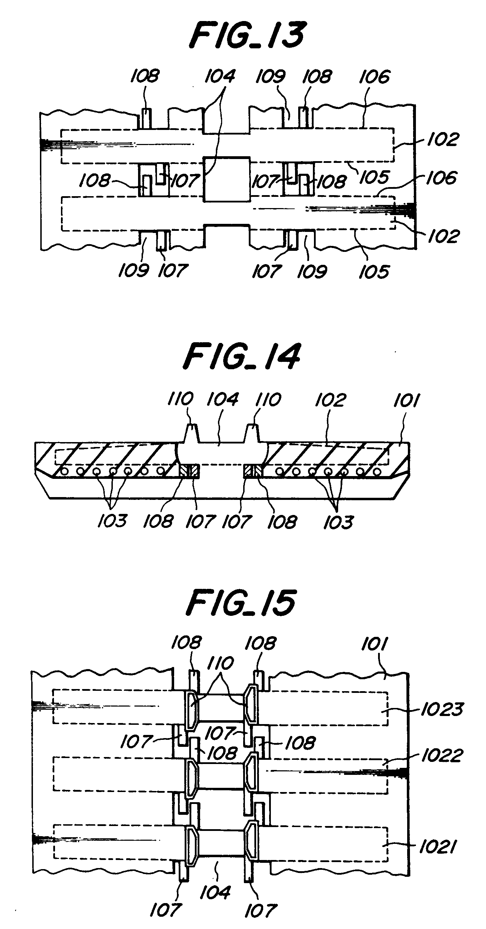

The rubber track main body 101 may be thin at its portions corresponding to the overlapping portions of the extensions 107 and 108. Fig. 14 illustrates a fourth embodiment wherein parts of the rubber track main body 101 are thinner adjacent the overlapping portions of the extensions 107 and 108 than the remaining portions of the main body 101.

Moreover, the rubber track main body may be formed with recesses (not shown) surrounding the overlapping portions of the extensions 107 and 108 at the time when the rubber track main body 101 is vulcanized and formed.

In these embodiments, the extensions 107 and 108 extending from the edges of metal core members are overlapping in the width directions of the rubber track main body. There are various overlapping states of the extensions 107 and 108. Other than the extensions 107 arranged within the extensions 108 as shown, the extensions 107 and the extensions 108 may be alternately arranged inwardly and outwardly.

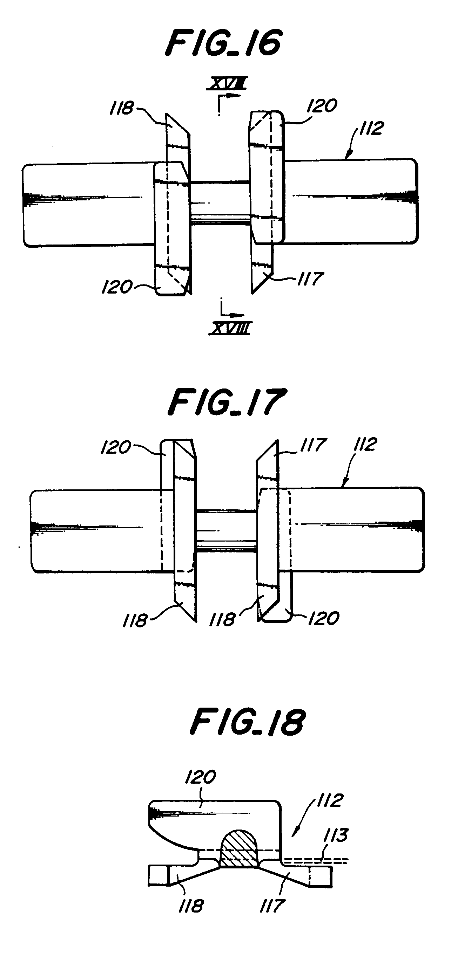

Referring to Fig. 15 illustrating a fifth embodiment, a first pair of extensions 107 extending from the edge of a metal core member 1023 are located shifted in one width direction of the rubber track main body 101 and adjacent and overlapping a second pair of extensions 108 extending from the adjacent metal core member 1022 and shifted in the opposite width direction. On the other hand, a first pair of extensions 107 extending from the metal core member 1022 and shifted in the one width direction are adjacent and overlapping the extensions 108 extending from the adjacent metal core member 1021 and shifted in the opposite width direction.

The rubber track shown in Fig. 15 has the extensions 107 and 108 arranged shifted alternately onto one side and the other side in the width directions of the metal core members. Therefore, the first pairs of extensions 107 and the second pair of extensions 108 of the metal core members are maintained in an identical relation as a whole, even if the rubber track is mounted on a machine so that the advancing direction of the rubber track becomes the retracting direction. Therefore, the rubber track of this embodiment needs no consideration of the forward or rearward direction thereof when it is mounted on a machine.

Fig. 16 illustrates a modification of the metal core member used in the embodiment shown in Fig. 15. Fig. 17 is a back view of the metal core member and Fig. 18 is a sectional view taken along the line XVIII-XVIII in Fig. 15.

In this embodiment, metal core members 112 are formed with extensions 117 and 118 extending in the longitudinal directions of the rubber track and located below guide rails 120 or on the side of the ground contacting surface of the rubber track. Ends of the extensions 117 and 118 are in the form of feathers of an arrow so as to be fitted with each other in succession. The overlapping portions of the extensions 117 and 118 are located on the outer side of steel cords 113. It has been found that such an arrangement of the extensions and the steel cords effectively prevents lateral shifting, torsion, reverse bending, and overhanging falling down of the rubber track. Figs. 16 to 18 illustrate one example of the metal core member 112 having guide rails 120 projecting in longitudinal directions of the rubber track on opposite sides with respect to the metal core member 112, respectively.

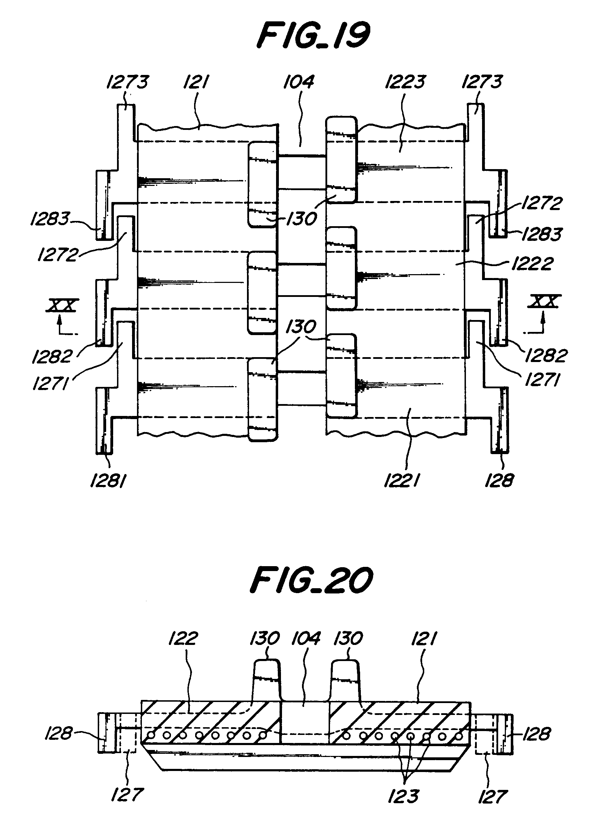

Fig. 19 illustrates a seventh embodiment and Fig. 20 is a sectional view taken along the line XX-XX in Fig. 19. In this embodiment, both ends of each of metal core members 122 project from side edges of a rubber track main body 121 and are formed with a first pair of extensions 127 and a second pair of extensions 128 extending in the longitudinal directions of the rubber track main body 121, respectively. First and second pairs of extensions 1271 and 1282 respectively projecting from adjacent metal core members 1221 and 1222 are adjacent and overlapping. These extensions 1271 and 1282 of the adjacent metal core members 1221 and 1222 are overlapping in the width directions in a continuous and successive manner.

Steel cords 123 are embedded in the rubber track main body 121 substantially in the same plane as that of overlapping of the extensions 127 and 128. Reference numeral 130 denotes guide rails for rollers of a machine equipped with the rubber track. The guide rails 130 also serve to prevent the rubber track from being detracked from the machine.

As can be seen from the above explanation, by the feature of overlapping the extensions projecting from the adjacent metal core members the rubber track can limit lateral movements thereof and hence effectively prevent lateral shifting, torsion, reverse bending, and overhanging of the rubber track. Such a rubber track exhibits a particularly good performance when mounted on large type construction machines and civil engineering working machines to be used on uneven grounds or roads.

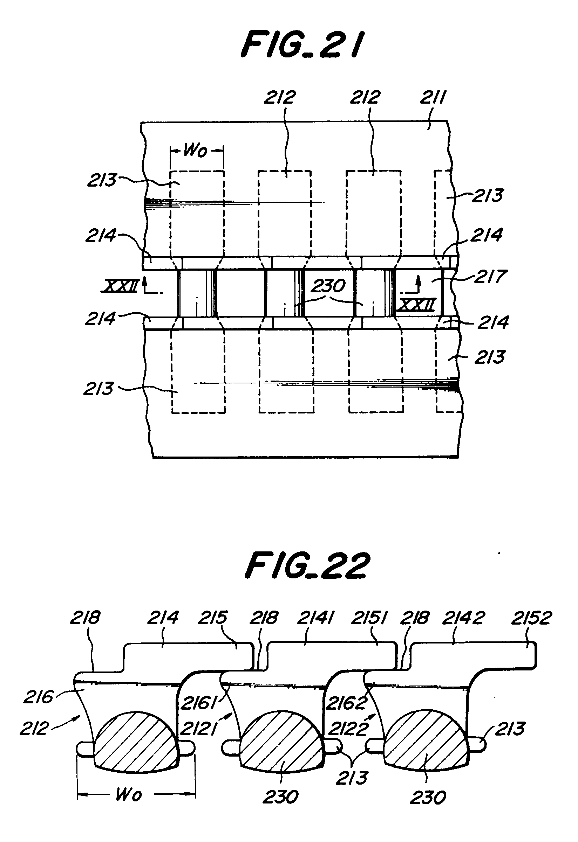

Fig. 21 illustrates an eighth embodiment of a rubber track, and Fig. 22 is a sectional view of metal core members on an enlarged scale taken along the line XXII-XXII in Fig. 21.

Referring to Figs. 21 and 22, a rubber track main body 211 has a number of metal core members 212 embedded therein and extending in the width direction of the main body with a predetermined interval, both wing portions 213 of which are embedded in the rubber track main body 211. The metal core members 212 are integrally formed with extensions 214 extending longer than the width Wo of the metal core members 212 to form guide rails for rollers of a machine equipped with the rubber track. Each of the extensions 214 extends lengthwise in one longitudinal direction of the rubber track main body 211 to form a forward end 215 which is adapted to be located on a rearward end 2161 of an extension 2141 of the adjacent metal core member 2121.

The forward ends 2151 of the extensions 2141 are adapted to be located on the rearward ends 2162 of the adjacent extensions 2142. In this manner, the extensions 214 of the metal core members 212 are successively and continuously arranged so that the forward ends 215 are successively arranged on the rearward ends of the extensions 214 of the adjacent core members 212. Reference numeral 217 denotes mesh recesses formed along a center line of the rubber track main body 211 between the adjacent metal core members 212 for receiving teeth of a sprocket wheel (not shown).

In this embodiment, the extensions 214 are formed at their rearward ends with shoulders 218 so that flat guide rails are formed by upper surfaces of the extensions 214 when the forward ends 215, 2151, 2152,··· are located on the shoulders 218 of the rearward ends 216, 2161, 2162,···.

In this manner, extensions forming the guide rails for the rollers are overlapping one above the other in thickness directions of the rubber track main body 211 instead of overlapping in the width directions of the rubber track main body. Therefore, even if the rubber track is subjected to a large force in width directions, the overlapping portions are not disengaged from each other to ensure reliable guide rails.

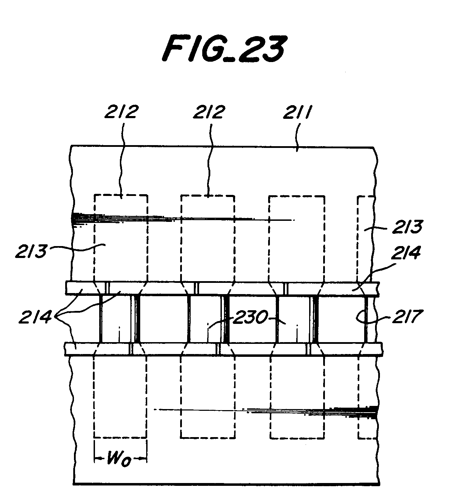

Fig. 23 illustrates a ninth embodiment of a rubber track, in which a pair of extensions 214 of each of metal core members 212 extend in opposite longitudinal directions of the rubber track main body 211. The overlapping of the extensions of the adjacent metal core members 212 is similar to that of the eighth embodiment shown in Figs. 21 and 22.

While the extensions forming the guide rails extend in the longitudinal direction in a manner deflected on one side with respect to the width direction of the metal core member in the above two embodiments, it will be apparent that the extensions 214 may extend in symmetry with respect to the metal core members 212.

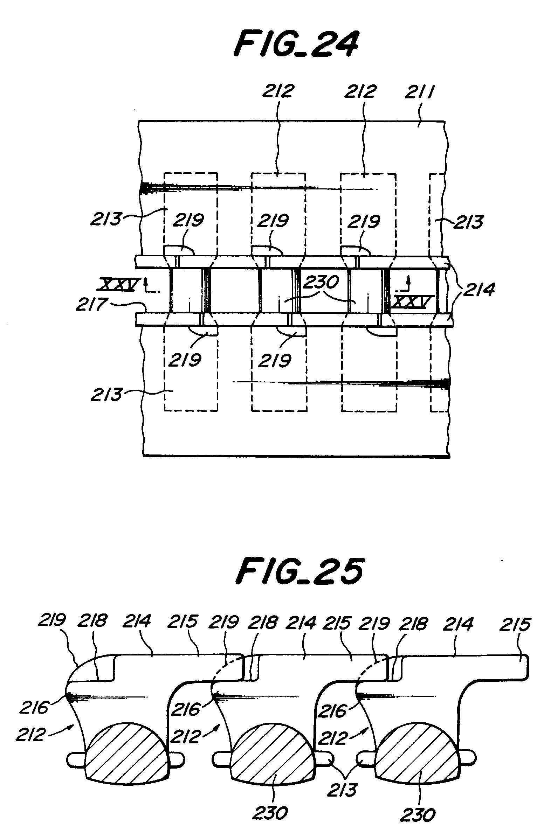

Figs. 24 and 25 illustrate a rubber track as shown in Fig. 23 provided with lateral shift preventing means or walls 219 for guide rails. In this embodiment, each of the walls 219 as the lateral shift preventing means is provided at the shoulder 218 on its one side formed at the rearward ends 216 of the extensions 214. When the forward ends 215 of the extensions 214 of the metal core member 212 are located on the shoulders 218 of the adjacent metal core member 212, the preventing means or walls maintain the forward ends 215 and the shoulders 218 in position so that the guide rails do not shift laterally.

The lateral shift preventing means may of course be provided at the shoulders 218 of the metal core members of the rubber track shown in Figs. 21 and 22.

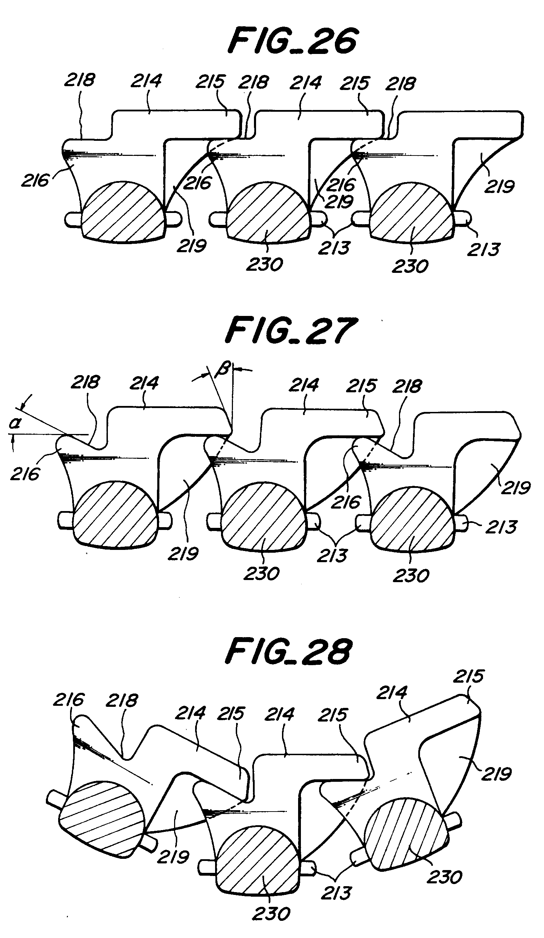

Although the lateral shift preventing means have been shown provided at the shoulders of the rearward ends of the extensions 214 for restraining the forward ends of the extensions, such means may be provided on the forward ends for restraining the rearward ends 216 having the shoulders 218 as shown in Fig. 26. In more detail, each of walls 219 is provided at the forward end 215 at its one side and extends downwardly therefrom so that the shoulders 218 of the adjacent extensions 214 are prevented from laterally shifting by the engagement of the walls and shoulders. It is a matter of course that such preventing means may be applied to the forward ends of the extensions shown in Fig. 21.

The above embodiments are applications to rubber tracks having extensions projecting from the metal core members inwardly of the rubber tracks and using the surfaces of the extensions as guide rails for rollers of a machine equipped with the rubber tracks. Such rubber tracks can be prevented from being detracked from the rollers of the machine and have a superior performance for controlling directions of the rubber tracks.

Extensions shown in Fig. 27 are formed with shoulders 218 inclined at an angle α to the surfaces of the forward ends forming the guide rails and with end surfaces of forward ends 215 inclined at angle β to the surfaces of the forward ends. With this arrangement, the forward ends 215 are smoothly engaged onto the shoulders 218, as shown in Fig. 28, when the rubber track is moved around a sprocket wheel (not shown). In this case, it is preferable that the above angles α and β and an angle γ are substantially equal to one another, where the angle γ is a central angle of an arc connecting centers of two adjacent metal core members 212 having a center coincident with the center of the sprocket wheel.

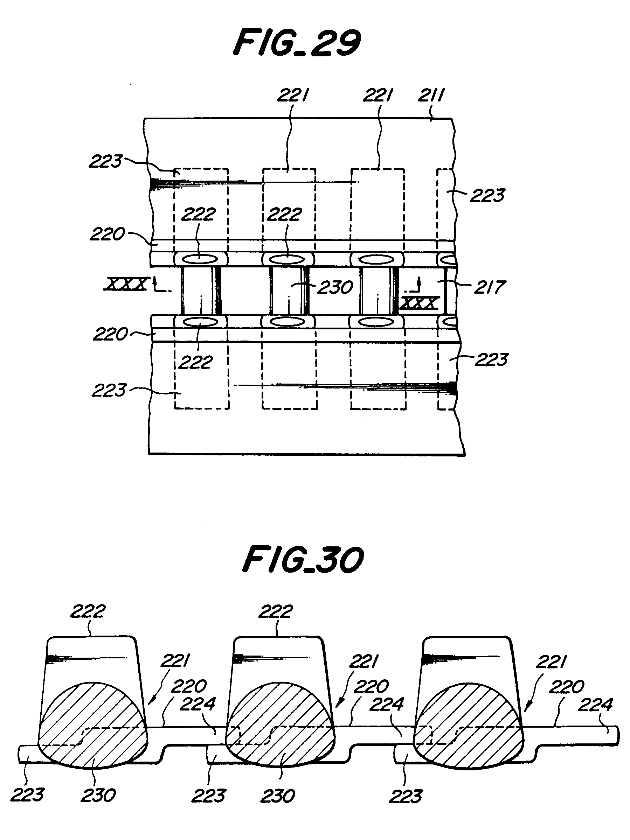

It may be conceived as another configuration of the rubber track that guide rails for the rollers are formed separately from pairs of the extensions and the extensions are used for preventing detracking of the rubber track and controlling directions of the rubber track. Figs. 29 and 30 illustrate a tenth embodiment which realizes such a configuration of the rubber track.

In this embodiment, extensions 220 are formed directly on wing portions 223 of metal core members 221 on outer sides of pairs of projection guides 222 formed on the metal core members 221. In this case, forward ends 224 of the extensions 220 extend in opposite longitudinal directions of the rubber track and are located on the wing portions 223 of the adjacent metal core members.

The pair of guide rails 220 are formed alternately shifted in opposite directions in width directions of the metal core members 221 in this embodiment. However, the guide rails may be formed in a manner extending equal distances in the width directions, although this is not illustrated.

Even in the tenth embodiment, the overlapping portions do not disengage from each other even when being subjected to forces in the width directions of the rubber track so that stable guide rails are always ensured.

Reference numeral 230 in Figs. 21 to 30 shows mesh recesses for receiving teeth of a sprocket wheel (not shown).

As can be seen from the above explanation, the guide rails for rollers of a machine equipped with the rubber track are successively overlapped in directions of the thickness of the rubber track so that effective surfaces for rolling the rollers are always ensured, with the result that vibrations to be transmitted to a machine are mitigated and damage to the core members and detracking of the rubber track from the machine are effectively prevented.

While the invention has been particularly shown and described with reference to preferred embodiments thereof, it will be understood by those skilled in the art that the foregoing and other changes in form and details can be made therein without departing from the scope of the invention.

## Claims

1. A rubber track including a rubber track main body (51) made of an elastic material forming an endless belt and a number of metal core members (53) extending in the width direction of the rubber track main body and embedded therein substantially in parallel with one another with a predetermined interval in the longitudinal direction of the rubber track main body, said metal core members projecting inwardly of said endless belt to form in operation a pair of guide rails (54, 55) for rollers of a machine equipped with the rubber track, characterized in that said metal core members forming said guide rails have extensions (54A, 54B, 55A, 55B) integrally formed therewith, whose forward ends and rearward ends of adjacent metal core members are successively overlapping in thickness and/or width directions of the rubber track main body, and wherein the overlapped regions of the extensions of the core members are embedded in the rubber track main body.

2. A rubber track as claimed in claim 1, characterized in that said rearward ends of said extensions are formed with shoulders on which the forward ends of said extensions of the adjacent metal core members are successively settled.

3. A rubber track as claimed in claim 1 or 2, characterized in that said extensions of each of the metal core members extend in one longitudinal direction of the rubber track.

4. A rubber track as claimed in claim 1 or 2, characterized in that said extensions of each of the metal core members extend in opposite longitudinal directions of the rubber track, respectively.

5. A rubber track as claimed in any of claims 2 to 4, characterized in that said metal cord members have lateral shift preventing means (219) for preventing said forward ends of the metal core members and rearward ends of the adjacent core members from being shifted relative to each other.

6. A rubber track as claimed in claim 5, characterized in that said lateral shift preventing means comprise walls (219), each provided at the shoulder (218) on its one side.

7. A rubber track as claimed in claim 5, characterized in that said lateral shift preventing means comprise walls (219), each provided at the forward end (215) of the extension (214) on its side and extending downwardly therefrom.

8. A rubber track as claimed in any of claims 2 to 7, characterized in that said shoulders (218) are inclined at an angle α to surfaces of the forward ends (215) forming the guide rails and end surfaces of the forward ends are inclined at an angle β to the surfaces of the forward ends, and the angles α and β and an angle γ are substantially equal to one another, where the angle γ is the central angle of an arc connecting centers of two adjacent metal core members (212) having a center coincident with the center of a sprocket wheel engaging the rubber track for driving it.

9. A rubber track as claimed in any of claims 1 to 8, characterized in that said extensions are formed separately from the guide rails and on outer side of the guide rails, the forward ends of the extensions directly overlapping wing portions of the adjacent metal core members.

10. A rubber track as claimed in any of claims 1 to 9, characterized in that said extensions of each of the metal core members consist of first extensions extending in one longitudinal direction of the rubber track main body and positioned on the outer side thereof and second extensions extending in the opposite longitudinal direction of the rubber track main body and positioned on the inner side thereof, the first extensions overlapping second extensions of the adjacent metal core member in the width direction of the rubber track main body.

11. A rubber track as claimed in any of claims 1 to 10, characterized in that the rubber track main body (51) is formed in its inner surface with small recesses (56,57) adjacent ends of the first extensions of the metal core members and the second extensions of the adjacent metal core members, and/or the rubber track main body is further formed in its ground contact surface with large recesses (60,61).

12. A rubber track as claimed in any of claims 1 to 11, characterized in that each of said metal core members comprises on the side opposite to the guide rails with respect to the metal core member a first pair of extensions extending from the core member in one longitudinal direction of the rubber track main body and a second pair of extensions extending from the core member in the opposite longitudinal direction of the rubber track main body, the first pair of extensions overlapping a second pair of extensions of the adjacent metal core member in the width direction of the rubber track main body.

13. A rubber track as claimed in claim 12, characterized in that said first pair of extensions of each metal core member are located on the inner side of the second pair of extensions of the adjacent metal core member.

14. A rubber track as claimed in claim 12 or 13, characterized in that said first pair of extensions of each metal core member are located shifted in one width direction of the rubber track main body and a second pair of extensions of the adjacent metal core member are located shifted in the opposite width direction of the rubber track main body.

15. A rubber track as claimed in any of claims 12 to 14, characterized in that the first pair of extensions of each metal core member and the second pair of extensions of the adjacent core member overlapping each other extend in one mesh recess formed in the rubber track main body for receiving teeth of a sprocket wheel for driving the rubber track.

16. A rubber track as claimed in any of claims 12 to 14, characterized in that the first pair of extensions of each metal core member and the second pair of extensions of the adjacent core member overlapping each other extend in spaces formed in the rubber track main body separately from one mesh recess formed in the rubber track main body for receiving teeth of a sprocket wheel for driving the rubber track.

17. A rubber track as claimed in any of claims 12 to 16, characterized in that parts of the rubber track main body adjacent the overlapping portions of the extensions are formed thinner than remaining portions.

18. A rubber track as claimed in any of claims 12 to 17, characterized in that ends of the first and second pairs of extensions are in the form of feathers of an arrow so as to be fitted with each other in succession.

19. A rubber track as claimed in any of claims 12 to 18, characterized in that said first and second pairs of extensions of each of the metal core members are formed at both ends of the metal core members extending from side edges of the rubber track main body, respectively.

## Patentansprüche

1. Gummi-Laufkette, dei umfaßt: einen Hauptkörper (51) der Gummi-Laufkette aus einem elastischen Material, das ein Endlosband bildet; und eine Anzahl von Metallkernelementen (53), die sich in der Breitenrichtung des Hauptkörpers der Gummi-Laufkette erstrecken und darin im wesentlichen parallel zueinander mit einem vorgegebenen Abstand in der Längsrichtung des Hauptkörpers der Gummi-Laufkette eingebettet sind, wobei die Metallkernelemente nach innen zu aus dem Endlosband herausragen, um beim Betrieb ein Paar Führungsschienen (54, 55) für die Walzen einer Maschine die mit der Gummi-Laufkette ausgestattet ist, zu bilden dadurch gekennzeichnet, daß die Metallkernelemente, die die Führungsschienen bilden, Verlängerungen (54A, 54B, 55A, 55B) aufweisen, die in einem Stück mit diesen ausgebildet sind, wobei sich die vorderen Enden und die hinteren Enden der benachbarten Metallkernelemente nacheinander in der Dicken- und/oder Breitenrichtung des Hauptkörpers der Gummi-Laufkette überlappen, und bei denen die überlappten Bereiche der Verlängerungen der Kernelemente im Hauptkörper der Gummi-Laufkette eingebettet sind.

2. Gummi-Laufkette nach Anspruch 1, dadurch gekennzeichnet, daß die hinteren Enden der Verlängerungen mit Vorsprüngen gebildet werden, auf denen die vorderen Enden der Verlängerungen der benachbarten Metallkernelemente nacheinander abgesetzt werden.

3. Gummi-Laufkette nach Anspruch 1 oder 2, dadurch gekennzeichnet, daß sich die Verlängerungen eines jeden Metallkernelementes in einer Längsrichtung der Gummi-Laufkette erstrecken.

4. Gummi-Laufkette nach Anspruch 1 oder 2, dadurch gekennzeichnet, daß sich die Verlängerungen eines jeden Metallkernelementes in der entgegengesetzten Längsrichtung der Gummi-Laufkette entsprechend erstrecken.

5. Gummi-Laufkette nach einem der Ansprüche 2 bis 4, dadurch gekennzeichnet, daß die Metallkernelemente eine Einrichtung (219) für das Verhindern einer seitlichen Verschiebung aufweisen, um zu verhindern, daß die vorderen Enden der Metallkernelemente und die hinteren Enden der benachbarten Kernelemente relativ zueinander verschoben werden.

6. Gummi-Laufkette nach Anspruch 5, dadurch gekennzeichnet, daß die Einrichtung für das Verhindern der seitlichen Verschiebung Wände (219) aufweist, die jeweils am Vorsprung (218) an deren einen Seite vorhanden sind.

7. Gummi-Laufkette nach Anspruch 5, dadurch gekennzeichnet daß die Einrichtung für das Verhindern der seitlichen Verschiebung Wände (219) aufweist, die jeweils am vorderen Ende (215) der Verlängerung (214) auf deren Seite vorhanden sind und sich von dort aus nach unten zu erstrecken.

8. Gummi-Laufkette nach einem der Ansprüche 2 bis 7, dadurch gekennzeichnet, daß die Vorsprünge (218) unter einem Winkel α zu den Oberflächen der vorderen Enden (215), die die Führungsschienen bilden, geneigt sind, und daß die Stirnseitenflächen der vorderen Enden unter einem Winkel β zur Oberfläche der vorderen Enden geneigt sind, und daß die Winkel α und β und ein Winkel γ im wesentlichen einander gleich sind, wobei der Winkel γ der Zentriwinkel eines Bogens ist, der die Mitten von zwei benachbarten Metall kernelementen (212) verbindet, die eine Mitte aufweisen, die mit der Mitte eines Kettenrades zusammenfällt, das mit der Gummi-Laufkette in Eingriff kommt, um diese anzutreiben.

9. Gummi-Laufkette nach einem der Ansprüche 1 bis 8, dadurch gekennzeichnet, daß die Verlängerungen separat von den Führungsschienen aus und auf der äußeren Seite der Führungsschienen gebildet werden, wobei die vorderen Enden der Verlängerungen direkt die Flügelabschnitte der benachbarten Metallkernelemente überlappen.

10. Gummi-Laufkette nach einem der Ansprüche 1 bis 9, dadurch gekennzeichnet daß die Verlängerungen eines jeden Metallkernelementes aus ersten Verlängerungen, die sich in einer Längsrichtung des Hauptkörpers der Gummi-Laufkette erstrecken und an dessen äußeren Seite angeordnet sind, und zweiten Verlängerungen bestehen, die sich in der entgegengesetzten Längsrichtung des Hauptkörpers der Gummi -Laufkette erstrecken und an dessen inneren Seite angeordnet sind, wobei die ersten Verlängerungen die zweiten Verlängerungen der benachbarten Metallkernelemente in der Breitenrichtung des Hauptkörpers der Gummi-Laufkette überlappen.

11. Gummi-Laufkette nach einem der Ansprüche 1 bis 10, dadurch gekennzeichnet, daß der Hauptkörper (51) der Gummi-Laufkette an seiner inneren Oberfläche mit kleinen Aussparungen (56, 57) versehen ist, die an die Enden der ersten Verlängerungen der Metallkernelemente und die zweiten Verlängerungen der benachbarten Metallkernelemente angrenzen, und/oder daß der Hauptkörper der Gummi-Laufkette außerdem in seiner Bodenkontaktfläche mit großen Aussparungen (60, 61) versehen ist.

12. Gummi-Laufkette nach einem der Ansprüche 1 bis 11 dadurch gekennzeichnet, daß jedes Metallkernelement aufweist: auf der Seite, die den Führungsschienen mit Bezugnahme auf das Metallkernelement gegenüberliegt, ein erstes Paar Verlängerungen das sich vom Kernelement aus in einer Längsrichtung des Hauptkörpers der Gummi-Laufkette erstreckt; und ein zweites Paar Verlängerungen, das sich vom Kernelement aus in der entgegengesetzten Längsrichtung des Hauptkörpers der Gummi-Laufkette erstreckt, wobei das erste Paar Verlängerungen ein zweites Paar Verlängerungen des benachbarten Metallkernelementes in der Breitenrichtung des Hauptkörpers der Gummi-Laufkette überlappt.

13. Gummi-Laufkette nach Anspruch 12, dadurch gekennzeichnet, daß das erste Paar Verlängerungen eines jeden Metallkernelementes an der inneren Seite des zweiten Paares Verlängerungen des benachbarten Metallkernelementes angeordnet ist.

14. Gummi -Laufkette nach Anspruch 12 oder 13, dadurch gekennzeichnet, daß das erste Paar Verlängerungen eines jeden Metallkernelementes in einer Breitenrichtung des Hauptkörpers der Gummi-Laufkette verschoben angeordnet ist, und daß ein zweites Paar Verlängerungen des benachbarten Metallkernelementes in der entgegensetzten Breitenrichtung des Hauptkörpers der Gummi-Laufkette verschoben angeordnet ist.

15. Gummi-Laufkette nach einem der Ansprüche 12 bis 14 dadurch gekennzeichnet, daß sich das erste Paar Verlängerungen eines jeden Metallkernelementes und das zweite Paar Verlängerungen des benachbarten Kernelementes, die einander überlappen, in eine Eingriffsaussparung hinein erstrecken, die im Hauptkörper der Gummi-Laufkette gebildet wird, um die Zähne eines Kettenrades aufzunehmen, um die Gummi-Laufkette anzutreiben.

16. Gummi-Laufkette nach einem der Ansprüche 12 bis 14, dadurch gekennzeichnet, daß sich das erste Paar Verlängerungen eines jeden Metallkernelementes und das zweite Paar Verlängerungen des benachbarten Kernelementes, die einander überlappen, in Räume hinein erstrecken, die im Hauptkörper der Gummi-Laufkette gebildet werden, separat von einer Eingriffsaussparung, die im Hauptkörper der Gummi -Laufkette gebildet wird, um die Zähne eines Kettenrades aufzunehmen, um die Gummi-Laufkette anzutreiben.

17. Gummi-Laufkette nach einem der Ansprüche 12 bis 16, dadurch gekennzeichnet daß Teile des Hauptkörpers der Gummi-Laufkette, die den sich überlappenden Abschnitten der Verlängerungen benachbart sind, dünner ausgebildet sind, als die restlichen Abschnitte.

18. Gummi-Laufkette nach einem der Ansprüche 12 bis 17 dadurch gekennzeichnet, daß die Enden der ersten und zweiten Paare Verlängerungen in der Form von Zuspitzungen eines Pfeiles so ausgebildet sind, daß sie zueinander in Folge passen.

19. Gummi-Laufkette nach einem der Ansprüche 12 bis 18, dadurch gekennzeichnet, daß die ersten und zweiten Paare Verlängerungen eines jeden Metallkernelementes an beiden Enden der Metallkernelemente ausgebildet werden, wobei sie sich von den Seitenrändern des Hauptkörpers der Gummi-Laufkette aus entsprechend erstrecken.

## Revendications

1. Chenille en caoutchouc englobant un corps principal (51) de la chenille en caoutchouc, composé d'un matériau élastique formant une courroie sans fin, et un certain nombre d'éléments de noyau métalliques (53) s'étendant dans la direction de la largeur du corps principal de la chenille en caoutchouc et enrobés dans celui-ci, pratiquement parallèles les uns aux autres, à un intervalle prédéterminé dans la direction longitudinale du corps principal de la chenille en caoutchouc, lesdits éléments de noyau métalliques débordant vers l'intérieur de ladite courroie sans fin pour former en service une paire de rails de guidage (54, 55) pour les galets d'un engin équipé de la chenille en caoutchouc, caractérisée en ce que lesdits éléments de noyau métalliques formant lesdits rails de guidage comportent des extensions (54A, 54B, 55A, 55B) qui ont font partie intégrante, les extrémités avant et les extrémités arrière des éléments de noyau métalliques adjacents se recouvrant successivement dans les directions de l'épaisseur et/ou de la largeur du corps principal de la chenille en caoutchouc et les régions à recouvrement des extensions des éléments de noyau étant enrobées dans le corps principal de la chenille en caoutchouc.

2. Chenille en caoutchouc selon la revendication 1, caractérisée en ce que lesdites extrémités arrière desdites extensions comportent des épaulements sur lesquels sont fixées successivement les extrémités avant desdites extensions des éléments de noyau métalliques adjacents.

3. Chenille en caoutchouc selon les revendications 1 ou 2, caractérisée en ce que lesdites extensions de chacun des éléments de noyau métalliques s'étendent dans une direction longitudinale de la chenille en caoutchouc.

4. Chenille en caoutchouc selon les revendications 1 ou 2, caractérisée en ce que lesdites extensions de chacun des éléments de noyau métalliques s'étendent respectivement dans les directions longitudinales opposées de la chenille en caoutchouc.

5. Chenille en caoutchouc selon l'une quelconque des revendications 2 à 4, caracterisée en ce que lesdits éléments de noyau métalliques comportent des moyens de prévention d'un décalage latéral (219) pour empêcher un décalage relatif entre lesdites extrémités avant des éléments de noyau métalliques et les extrémités arrière des éléments de noyau adjacents.

6. Chenille en caoutchouc selon la revendication 5, caractérisée en ce que lesdits moyens de prévention d'un décalage latéral comprennent des parois (219), agencée chacune au niveau de l'épaulement (218) sur un de ses côtés.

7. Chenille en caoutchouc selon la revendication 5, caractérisée en ce que lesdits moyens de prévention d'un décalage latéral comprennent des parois (219), agencée chacune au niveau de l'extrémité avant (215) de l'extension (214), sur son côté, et s'étendant vers le bas à partir de celle-ci.

8. Chenille en caoutchouc selon l'une quelconque des revendications 2 à 7, caractérisée en ce que lesdits épaulements (218) sont inclinés à un angle α par rapport aux surfaces des extrémités avant (215), formant les rails de guidage, les surfaces d'extrémité des extrémités avant étant inclinées à un angle β par rapport aux surfaces des extrémités avant, les angles α et β ainsi qu'un angle γ étant pratiquement égaux les uns aux autres, l'angle γ étant l'angle central d'un arc connectant les centres de deux éléments de noyau métalliques adjacents (212) ayant un centre coïncidant avec le centre d'un pignon s'engageant dans la chenille en caoutchouc en vue de son entraînement.

9. Chenille en caoutchouc selon l'une quelconque des revendications 1 à 8, caractérisée en ce que lesdites extensions sont formées séparément des rails de guidage et sur le côté externe des rails de guidage, les extrémités avant des extensions recouvrant directement les parties d'aile des éléments de noyau métalliques adjacents.

10. Chenille en caoutchouc selon l'une quelconque des revendications 1 à 9, caractérisée en ce que lesdites extensions de chacun des éléments de noyau métalliques sont composées de premières extensions, s'étendant dans une direction longitudinale du corps principal de la chenille et caoutchouc et agencées sur le côté externe correspondant, ainsi que de deuxièmes extensions s'étendant dans la direction longitudinale opposée du corps principal de la chenille en caoutchouc et agencées sur le côté interne correspondant, les premières extensions recouvrant les deuxièmes extensions de l'élément de noyau métallique adjacent dans la direction de la largeur du corps principal de la chenille en caoutchouc.

11. Chenille en caoutchouc selon l'une quelconque des revendications 1 à 10, caractérisée en ce que le corps principal de la chenille en caoutchouc (51) comporte dans sa surface interne de petits évidements (56, 57) près des extrémités des premières extensions des éléments de noyau métalliques et des deuxièmes extensions des éléments de noyau métalliques adjacents, et/ou en ce que le corps principal de la chenille en caoutchouc comporte en outre de grands évidements (60, 61) dans sa surface de contact avec le sol.

12. Chenille en caoutchouc selon l'une quelconque des revendications 1 à 11, caractérisée en ce que chacun desdits éléments de noyau métalliques comprend sur le côté opposé aux rails de guidage par rapport à l'élément de noyau métallique une première paire d'extensions, s'étendant de l'élément de noyau dans une direction longitudinale du corps principal de la chenille en caoutchouc, et une deuxième paire d'extensions s'étendant de l'élément de noyau dans la direction longitudinale opposée du corps principal de la chenille en caoutchouc, la première paire d'extensions recouvrant une deuxième paire d'extensions de l'élément de noyau métallique adjacent dans la direction de la largeur du corps principal de la chenille en caoutchouc.

13. Chenille en caoutchouc selon la revendication 12, caractérisé en ce que ladite première paire d'extensions de chaque élément de noyau métallique est agencée sur le côté interne de la deuxième paire d'extensions de l'élément de noyau métallique adjacent.

14. Chenille en caoutchouc selon les revendications 12 ou 13, caractérisée en ce que ladite première paire d'extensions de chaque élément de noyau métallique est agencée de façon décalée dans une direction de la largeur du corps principal de la chenille en caoutchouc, une deuxième paire d'extensions de l'élément de noyau métallique adjacent étant agencée de façon décalée dans la direction de largeur opposée du corps principal de la chenille en caoutchouc.

15. Chenille en caoutchouc selon l'une quelconque des revendications 12 à 14, caractérisée en ce que la première paire d'extensions de chaque élément de noyau métallique et la deuxième paire des extensions de l'élément de noyau métallique adjacent se recouvrant mutuellement s'étendent dans un évidement à engrènement formé dans le corps principal de la chenille en caoutchouc pour recevoir les dents d'un pignon en vue de l'entraînement de la chenille en caoutchouc.

16. Chenille en caoutchouc selon l'une quelconque des revendications 12 à 14, caractérisée en ce que la première paire d'extensions de chaque élément de noyau métallique et la deuxième paire d'extensions de l'élément de noyau adjacent se recouvrant mutuellement s'étendent dans les espaces formés dans le corps principal de la chenille en caoutchouc, séparément d'un évidement à engrènement formé dans le corps principal de la chenille en caoutchouc, pour recevoir les dents d'un pignon en vue de l'entraînement de la chenille en caoutchouc.

17. Chenille en caoutchouc selon l'une quelconque des revendications 12 à 16, caractérisée en ce que les parties du corps principal de la chenille en caoutchouc adjacentes aux parties à recouvrement des extensions sont plus fines que les autres parties.

18. Chenille en caoutchouc selon l'une quelconque des revendications 12 à 17, caractérisée en ce que les extrémités des première et deuxième paires d'extensions ont la forme d'empennes d'un arc, de sorte à s'adapter de façon mutuelle et successive.

19. Chenille en caoutchouc selon l'une quelconque des revendications 12 à 18, caractérisée en ce que lesdites première et deuxième paires d'extensions de chacun des éléments de noyau métalliques sont formées au niveau des deux extrémités des éléments de noyau métallique s'étendant respectivement à partir des bords latéraux du corps principal de la chenille en caoutchouc.
